# EUROPÄISCHE PATENTSCHRIFT

(11) **EP 2 406 430 B1**
(45) Veröffentlichungstag und Bekanntmachung des Hinweises auf die Patenterteilung: **25.05.2016**
(21) Anmeldenummer: 10707279.5
(22) Anmeldetag: 08.03.2010
(51) Int. Cl.: D21H 13/50, D21H 15/00, D01F 9/12, H01M 4/00, D04H 1/00

(54) **NETZWERKE AUS KOHLENSTOFF-NANOMATERIALIEN UND VERFAHREN ZU DEREN HERSTELLUNG**
NETWORKS OF CARBON NANO MATERIALS AND PROCESS FOR THEIR MANUFACTURE
RESEAUX DES NANOMATERIAUX DE CARBONE ET PROCEDE DE FABRICATION

(30) Priorität: 09.03.2009 DE 102009012349
(43) Veröffentlichungstag der Anmeldung: 18.01.2012
(73) Patentinhaber: Future Carbon GmbH, 95448 Bayreuth (DE)
(72) Erfinder: FORERO, Stefan, 95466 Weidenberg (DE); HERRMANN, Angelika, 95448 Bayreuth (DE); HELBIG, Jens, 90403 Nürnberg (DE)
(74) Vertreter: Müller, Christian Stefan Gerd
(86) Internationale Anmeldenummer: PCT/EP2010/052897
(87) Internationale Veröffentlichungsnummer: WO 2010/102974

(56) Entgegenhaltungen:
- WO-A1-2007/028369
- WO-A2-01/80334
- JP-A- 2010 037 660
- US-A1- 2005 040 090

## Beschreibung

Die vorliegende Erfindung betrifft generell Netzwerke, insbesondere 3D-Netzwerke oder Vliese aus Kohlenstoff-Nanomaterialien und Verfahren zu deren Herstellung. Insbesondere betrifft die Erfindung zunächst ein Verfahren zum Herstellen eines Kohlenstoff-Nanomaterial-Netzwerks, insbesondere von einem Kohlenstoff-Nanomaterial-3D-Netzwerk oder einem Kohlenstoff-Nanomaterial-Vlies, gemäß dem Oberbegriff von Patentanspruch 1. Weiterhin betrifft die Erfindung auch ein Kohlenstoff-Nanomaterial-Netzwerk, insbesondere ein Kohlenstoff-Nanomaterial-3D-Netzwerk oder Kohlenstoff-Nanomaterial-Vlies.

Kohlenstoff-Nanomaterialien sind im Stand der Technik an sich bereits bekannt und liegen in unterschiedlichen Formen vor.

### Kohlenstoff-Nanotubes

Kohlenstoff-Nanotubes (CNT) bestehen aus zum Zylinder aufgerollten, geschlossen Graphen-Schichten. Einzelne Röhren nennt man "single wall carbon nanotubes" (SWCNT), Teilchen aus konzentrisch gestapelten Röhren aufsteigenden Durchmessers werden "multiwall carbon nanotubes" (MWCNT) genannt.

CNT kann man über verschiedene Methoden herstellen. Am bekanntesten sind der Lichtbogenprozess, das Laserablationsverfahren und die katalytisch unterstützte Gasphasenabscheidung (CCVD). Letzteres Verfahren eignet sich zur großtechnischen Produktion von CNT. Hierbei entstehen die CNT aus gasförmigen Kohlenstofflieferanten, beispielsweise aus Kohlenwasserstoffen, Alkoholen, CO, CO₂ und dergleichen, auf metallischen, katalytisch aktiven Substraten.

Kommerziell verfügbare SWCNT haben Durchmesser von 0.5 - 4nm. MWCNT haben Durchmesser zwischen 6 - 100nm. Die Länge von CNT kann bis zu einigen mm betragen.

Die physikalischen Eigenschaften von CNT entsprechen weitestgehend jenen des Graphits entlang der Basalebenen.

CNT werden heute oftmals als mechanische Verstärkung, elektrisch und thermisch leitfähiges Additiv in Polymeren, Keramiken und Metallen eingesetzt. Dazu werden die CNT oft an ihrer Oberfläche chemisch modifiziert, um den Anforderungen einer guten Dispergierbarkeit und Anbindung an die Matrix zu genügen.

### Kohlenstoff-Nanofasern

Kohlenstoff-Nanofasern (CNF) bestehen in der Regel aus Graphenschichten, die entlang der Filamentachse aufeinander gestapelt sind. Der Winkel (die Orientierung) der Graphenebenen bezüglich der Filamentachse wird zur groben Unterscheidung herangezogen. Sogenannte 'Herringbone' CNF besitzen demnach Graphenebenen, die in einem Winkel ≠ 90° angeordnet sind. Diese CNF können massiv oder auch hohl sein. Ihre Durchmesser liegen im Bereich 50nm-1µm und ihre Längen können bis zu einigen mm betragen. Im Falle, dass die Graphenschichten in einen Winkel =90° zur Filamentachse angeordnet sind, spricht man von 'Platelet' CNF. Ihre Durchmesser liegen im Bereich 50nm-500nm und ihre Längen können bis zu 50µm betragen.

Diese CNF werden in der Regel über CVD hergestellt. Ihre Anwendungen finden sich vornehmlich in der Katalyse als Katalysatorträger und als aktive Zusatzstoffe in Li-Ionen-Batterien oder bei der Gasspeicherung.

### CNX-Netzwerke

Unter CNX sollen wahlweise CNT oder CNF oder aber eine Mischung aus beiden verstanden werden. In der Regel werden bei der Herstellung von Kompositmaterialien die CNX dem Matrixmaterial zugegeben. Aufgrund des hohen Aspektverhältnisses und der hohen spezifischen Oberfläche sind auf diesem Weg nur Komposite mit verhältnismäßig niedrigem CNX-Gehalt darstellbar.

Komposite mit hohem CNX-Gehalt kann man über die Infiltration der Matrix in ein bestehendes CNX-Netzwerk erreichen. Die Herstellung solcher CNX-Preformen ist bisher nur wenigen gelungen und erfordert einen hohen Zeit- und Maschinenaufwand.

Es existieren bereits verschiedene Verfahren zur Herstellung von porösen CNT-Strukturen. Diese kann man grob wie folgt unterteilen:

### CCVD-Verfahren

### 1) Direkte Herstellung als Vlies im CCVD-Verfahren:

Es wird ein Substrat mit Katalysator-Metall beschichtet, beispielsweise aufgedampft oder aus der Suspension, und in einen CCVD-Reaktor gebracht. Dort werden die CNT gewachsen. Die CNT wachsen gerade vom Substrat weg und bilden "Rasen".
Dies ist eine anisotrope Anordnung.

### 2) Aufbringen des CNT-Katalvsators auf einer porösen Struktur und wachsen der CNT mittels CCVD:

Es wird der Katalysator auf ein poröses Substrat aufgebracht, beispielsweise aus einer Suspension. Das beschichtete Substrat wird in einen CCVD-Reaktor gebracht und es werden CNT gewachsen. In einigen Fällen bleibt das poröse Substrat erhalten, so dass man nicht von einem reinen CNT-Netzwerk sprechen kann. In anderen Fällen wird das poröse Substrat aufgelöst und zurück bleibt eine poröse CNT-Struktur. Das poröse Substrat kann beispielsweise eine Keramik oder auch ein Kohlefaser-Textil sein.

### 3) CNT direkt aus dem CCVD-Prozess "ernten" und zu einem Netzwerk zusammenfügen:

Hier werden die CNT, beispielsweise aus einer CNT-Staubwolke, mittels geeigneter Vorrichtungen geerntet und zu mikroskopischen Fasern versponnen. Es wird auch berichtet, dass die Möglichkeit besteht, die CNT von einem Substrat, auf dem diese wachsen, oder gewachsen wurden, abzustreifen um damit ein Garn oder sogar eine Matte zu erzeugen.

### Aus einer CNT-Suspension

### 1) Die Suspension wird auf ein Substrat gegeben und das Lösemittel abgedampft:

CNT werden in eine leichtflüchtige, organische Suspension gebracht, wobei meistens alkoholische Lösemittel verwendet werden, und diese Suspensionen auf Substrate mittels Spin-Coating oder Rakeltechnik beschichtet. Es ergeben sich typischerweise sehr dünne CNT-Vliese (<50µm), die nicht freitragend sind und auf dem Substrat verbleiben. Hier ist es angebracht, eher von einer Beschichtung zu sprechen.

### 2) Aus einer CNT-Suspension wird das Lösemittel mittels Druck entfernt:

Dünne CNT Papiere (Bucky Paper) werden über Unter- oder Überdruck einer CNT Suspension auf einem Filter abgeschieden. Anschließend werden die CNT-Schichten abgezogen. Diese sind sehr flexibel. Es sind Verfahren aus CNT-Suspensionen in organischen Lösemitteln oder Wasser mit Tensid bekannt.

Es wurde bereits berichtet, dass dreidimensionale Strukturen über überkritische Trocknung aus höher konzentrierten CNT-Suspensionen hergestellt werden können.

Weiterhin ist bekannt, dass man mit der Hilfe von Bindern und Gelbildnern dreidimensionale CNT-Strukturen herstellen kann.

Solche Verfahren werden in einer Reihe älterer Druckschriften beschrieben, beispielsweise in der US2005040090, der US2005040090, der WO2005098084, der US5691054, der EP1416072, der US2007141345, der US2006207931, der US2007248758, der US20030211028, der WO2008051239, der US5691054 oder der EP1416072.

Aus dem oben dargestellten Stand der Technik geht hervor, dass gegenwärtig CNT basierte Netzwerke direkt aus dem CCVD-Verfahren oder aus der Suspension hergestellt werden. Eine Hochskalierung ist im ersten Fall sehr aufwendig und die hergestellten Garne und Folien oder anderen Strukturen enthalten mit den CNT in der Regel auch den Katalysator. Weiterhin kann man über das CCVD-Verfahren bisher keine Platten oder Blöcke herstellen.

Im Falle der Herstellungsverfahren aus Suspension ist man bisher auf den Einsatz von Über- oder Unterdruckkomponenten angewiesen. Weiterhin ist man gegenwärtig darauf beschränkt, mit Lösemittel zu arbeiten, was beim Hochskalieren neben dem rein apparativen Aufwand zu zusätzlichen Explosionsschutz-Maßnahmen führt. Dazu müssen weitere Themen wie Arbeitsplatzgrenzwerte/Expositionsgrenzwerte, Entsorgung, Emissionen und Umwelt berücksichtigt werden.

Der Umstieg auf wässrige Systeme ist bis heute noch nicht gelungen. Es ist seit langem bekannt, dass CNT aufgrund ihrer großen spezifischen Oberfläche, ihres Aspektverhältnisses und insbesondere aufgrund ihrer starken Verschlaufung untereinander grundsätzlich sehr schwer zu dispergieren sind. Noch schwieriger wird das Einbinden in wässriger Matrix, da die Oberflächenchemie der CNT mit Wasser nicht kompatibel ist. In Wasser neigen die verschlauften Grundagglomerate dazu sich miteinander zu größeren Agglomeraten zusammenzufinden.

Einzige gegenwärtige Lösung des Problems sieht vor, dem CNT/Wasser-System eine oberflächenaktive Substanz zuzugeben. Diese Maßnahme führt in der Tat zur besseren Kompatibilität der CNT zum Wasser. Allerdings ergibt sich das Problem der Schaumbildung beim Rühren/Mischen/Dispergieren, so dass Entschäumer - also weitere Additive - eingesetzt werden müssen.

Die obengenannten eingesetzten Hilfsstoffe verbleiben im CNT-Netzwerk und können selbst nach einer intensiven Wäsche nicht vollständig entfernt werden. Bei der Wäsche besteht dann auch die Gefahr, dass das Netzwerk reißt oder bricht.

Ausgehend vom genannten Stand der Technik liegt der vorliegenden Erfindung die Aufgabe zugrunde, ein Verfahren sowie ein Kohlenstoffnanomaterial-Netzwerk der eingangs genannten Art derart weiterzubilden, dass die zuvor beschriebenen Nachteile vermieden werden können.

Diese Aufgabe wird erfindungsgemäß gelöst durch das Verfahren zum Herstellen eines Kohlenstoff-Nanomaterial-Netzwerks, insbesondere eines Kohlenstoff-Nanomaterial-3D-Netzwerkes oder eines Kohlenstoff-Nanomaterial-Vlieses, mit den Merkmalen gemäß dem unabhängigen Patentanspruch 1, sowie das Kohlenstoff-Nanomaterial-Netzwerk, insbesondere Kohlenstoff-Nanomaterial-3D-Netzwerk und Kohlenstoff-Nanomaterial-Vlies, mit den Merkmalen gemäß den unabhängigen Patentansprüchen 11 und 12. Weitere Merkmale und Details der Erfindung ergeben sich aus der Beschreibung und den Beispielen. Dabei gelten Merkmale und Details, die im Zusammenhang mit dem erfindungsgemäßen Verfahren beschrieben sind, selbstverständlich auch vollumfänglich im Zusammenhang mit dem erfindungsgemäßen Kohlenstoff-Nanomaterial-Netzwerk, und umgekehrt.

Gemäß dem ersten Aspekt der Erfindung wird ein Verfahren zum Herstellen eines Kohlenstoff-Nanomaterial-Netzwerks, insbesondere eines Kohlenstoff-Nanomaterial-3D-Netzwerkes oder eines Kohlenstoff-Nanomaterial-Vlieses, bereitgestellt, das gekennzeichnet ist durch folgende Schritte:
a) Kohlenstoff-Nanomaterial, insbesondere CNX, wird in eine wässrige Lösung, insbesondere in Wasser, gegeben;
b) die wässrige Kohlenstoff-Nanomaterial-Lösung wird, insbesondere in Form eines Schlickers, auf ein Substrat gegeben und zu einem Grünkörper gebildet;
c) der Grünkörper wird getrocknet.

Gemäß einem zweiten Aspekt der Erfindung wird ein Kohlenstoff-Nanomaterial-Netzwerk, insbesondere ein Kohlenstoff-Nanomaterial-3D-Netzwerk oder ein Kohlenstoff-Nanomaterial-Vlies, bereitgestellt, das erhältlich ist durch ein erfindungsgemäßes Verfahren.

Gemäß einem weiteren Aspekt der Erfindung wird ein Kohlenstoff-Nanomaterial-Netzwerk, insbesondere ein Kohlenstoff-Nanomaterial-3D-Netzwerk oder ein Kohlenstoff-Nanomaterial-Vlies, bereitgestellt, das dadurch gekennzeichnet ist, dass dieses eine Porosität von über 50% aufweist.

Die vorliegende Erfindung betrifft ein Verfahren, mit welchem aus wässrigen, bei Bedarf additivfreien, Kohlenstoff-Nanomaterial-Lösungen, beispielsweise CNX-Lösungen, insbesondere Schlickern, beispielsweise über Rakeltechniken und/oder Gießtechniken, zusammenhängende, poröse Kohlenstoff-Nanomaterial-Netzwerke, beispielsweise CNX-Netzwerke, hergestellt werden können.

Weiterhin betrifft die Erfindung auch zusammenhängende, poröse Kohlenstoff-Nanomaterial-Netzwerke, beispielsweise CNX-Netzwerke, und deren Anwendungen.

CNX bezeichnet dabei, wie eingangs bereits beschrieben, Kohlenstoff-Nanofasern (carbon nanofibers, CNF) und/oder Kohlenstoff-Nanoröhren (carbon nanotubes, CNT), oder eine Mischung aus beiden, so dass auf die Ausführungen in der Beschreibungseinleitung vollinhaltlich Bezug genommen und verwiesen wird.

Die Herstellung von derartigen Netzwerken, beispielsweise 3D-Netzwerken oder Vliesen, über eine wässrige Route bedeutet in vieler Hinsicht einen ökonomisch und ökologisch wichtigen Schritt nach vorn.

Nunmehr wurde herausgefunden, dass unter geeigneten Mischbedingungen, insbesondere auch in binder- und tensidfreien CNX-Wasser-Systemen, ein latenter Suspensionszustand erzeugt werden kann, in dem die CNX für eine ausreichend lange Zeit sehr gut verteilt bleiben. In diesem Zustand stellt der wässrige CNX-Schlicker den optimalen Präkursor für ein CNX-basiertes Vlies oder ein CNX-basiertes 3D-Netzwerk, welches keine weiteren Hilfsadditive enthält, dar.

Überraschenderweise lässt sich die Mischung, beispielsweise der Schlicker, mit dem erfindungsgemäß entwickelten Verfahren sehr schnell trocknen, ohne dass das zurückbleibende Kohlenstoff-Nanomaterial-Netzwerk, beispielsweise das CNX-Netzwerk, Risse enthält oder gar zerbricht. Das ist ein deutlicher Hinweis auf einen gut verteilten und dennoch zusammenhängenden Faserstoff in Suspension.

Vorteilhaft kann das Kohlenstoff-Nanomaterial in der wässrigen Lösung und weitere Partikel miteinander vermengt werden.

Beispielsweise kann das Kohlenstoff-Nanomaterial in der wässrigen Lösung mit weiteren Partikeln vermengt werden. Es ist gelungen, Kohlenstoff-Nanomaterial, beispielsweise die CNX, in der wässrigen Lösung, beispielsweise im Schlicker, mit anderen Partikeln stabil zu vermengen, um daraus Mischnetzwerke, beispielsweise Mischvliese oder 3D-Mischnetzwerke, zu erzeugen. Auch diese sind rissfrei herzustellen, was wiederum mit den gut verteilten Kohlenstoff-Nanomaterialien, beispielsweise den CNX, zu tun hat, die auch in verhältnismäßig geringen Anteilen von weniger als 50% dem Netzwerk, beispielsweise dem Mischvlies oder 3D-Mischnetzwerk genügend Halt geben.

Beispielsweise können mit dem Verfahren Kohlenstoff-Nanomaterial-Netzwerke in Form von 3D-Körpern, Platten oder flexiblen Papieren hergestellt werden. Das Verfahren ist sowohl für die Herstellung von 3D-Körpern wie auch von Platten und flexiblen Papieren geeignet. Ein derart flexibles Verfahren zur Herstellung von 3D-Netzwerken und Vliesen mit Kohlenstoff-Nanomaterial, insbesondere CNT, ist bisher nicht bekannt.

Beispielsweise können Gereinigte CNX bevorzugt in 0.05 - 5 gew-%ig, vorzugsweise 0,5 - 3 gew-%ig, in VE-Wasser gegeben werden.

Vorzugsweise wird der pH-Wert basisch eingestellt, beispielsweise auf pH 7-12.

Es können mehrere aufeinander abgestimmte Misch-Stufen folgen, beispielsweise in einem Homogenisator, Dissolver, Ultraschall, Kugelmühle, Korbmühle, Perlmühle oder durch andere geeignete Verfahren.

Beispielsweise können dem Kohlenstoff-Nanomaterial in der wässrigen Lösung weitere Partikel zugegeben werden. Zur homogenen Dispergierung können gegebenenfalls andere Partikel dazugegeben werden.

Beispielsweise kann die wässrige Kohlenstoff-Nanomaterial-Lösung auf ein nicht saugfähiges Substrat gegeben werden.

In anderer Ausgestaltung kann die wässrige Kohlenstoff-Nanomaterial-Lösung auf ein saugfähiges und/oder poröses Substrat gegeben werden, welches der Kohlenstoff-Nanomaterial-Lösung Wasser entzieht. Gemäß diesem Aspekt der Erfindung kann man das Substrat aus verschiedenen Rohstoffen, beispielsweise aus allen Gips-, Zement-, und Porzellan-Rohstoffen oder aus anderen geeigneten Stoffen herstellen. Entscheidend ist, dass das Substrat eine Porosität besitzt, die der aufgebrachten Mischung, beispielsweise dem Schlicker, das Wasser in geeigneter Weise entzieht.

Die Saugwirkung des Substrates kann über die Zumischung von Füllstoffen wie beispielsweise Fasern oder anderen Additiven eingestellt werden.

Die Oberfläche des Substrates sollte möglichst eben sein.

Vorzugsweise kann die wässrige Kohlenstoff-Nanomaterial-Lösung auf ein planar ausgebildetes Substrat gegeben werden. Das Substrat kann vorteilhaft aus einer ebenen Platte bestehen oder die Gestalt einer Gießform haben.

Beispielsweise kann die wässrige Kohlenstoff-Nanomaterial-Lösung auf ein Substrat mit einer dreidimensionalen Form gegeben werden. In diesem Fall ist das Substrat, beispielsweise das saugfähige und/oder poröse Substrat, insbesondere in einer dreidimensionalen Form ausgebildet.

Es erweist sich als vorteilhaft, ein geeignetes Trennmittel auf das Substrat zu geben. Das Trennmittel kann beispielsweise in Form von Öl/Wasser-, Graphit-, Wachs-, Emulsion/Dispersion, und dergleichen vorliegen.

Zum Gießen von Platten eignet sich ein Rahmen, beispielsweise aus einem Polymer oder Metall, den man auf das Substrat legt, und der die Begrenzung für die Mischung, beispielsweise den Schlicker, darstellt.

Zur Herstellung eines Netzwerks, beispielsweise eines 3D-Netzwerkes, über Schlicker-Gießen wird ein Rahmen geeigneter Höhe auf das gegebenenfalls zuvor mit Trennmittel beschichtete Substrat gelegt. Der Schlicker wird auf das Substrat in den Innenraum des Rahmens gegossen. Nach kurzer Zeit, vorzugsweise nach ein paar Minuten, ist der Grünkörper fertig und kann zum Trocknen in eine geeignete Trockeneinheit transferiert werden. Die Trocknung kann beispielsweise im Umluftofen, im Mikrowellenofen, oder dergleichen erfolgen.

In weiterer Ausgestaltung kann die wässrige Kohlenstoff-Nanomaterial-Lösung mittels eines Foliengießverfahrens auf dem Substrat aufgetragen werden. Gemäß diesem weiteren Aspekt der Erfindung erfolgt die Herstellung über Foliengießen und ist nicht auf ein saugfähiges Substrat angewiesen. Beim Foliengießen wird die Mischung, beispielsweise der Schlicker, auf dem Substrat vorzugsweise mittels einer Rakel aufgetragen. Nach kurzer Zeit, vorzugsweise nach ein paar Minuten, kann der Vorgang zur Herstellung dickerer Folien auf der (den) vorherigen teilgetrockneten Schicht(en) wiederholt werden. Nach einigen weiteren Minuten ist die Grünfolie fertig und kann zum Trocknen in eine geeignete Trockeneinheit transferiert werden. Die Trocknung kann beispielsweise im Umluftofen, im Mikrowellenofen, oder dergleichen erfolgen.

Auch hier sollte die Oberfläche des Substrats möglichst eben sein und das Substrat sollte vorteilhaft aus einer ebenen Platte oder einer ebenen, flach aufliegenden Folie bestehen.

Der Einsatz eines Trennmittels kann vorteilhaft sein, ist aber bei geeigneter Wahl des Substrats nicht notwendig. Wird ein Trennmittel eingesetzt, so kann es beispielsweise in Form von Öl/Wasser-, Graphit-, Wachs-, Emulsion/Dispersion und dergleichen vorliegen.

Die vorstehend beschriebenen erfindungsgemäßen Verfahren lassen sich bei Bedarf variieren und so auf die genauen Anforderungen abstimmen.

Beispielsweise kann der Grünkörper mit weiteren Partikeln infiltriert werden. So lassen sich vorteilhaft durch die Infiltration des Grünlings mit Lösemitteln die Dichte und Porenverteilung des anschließend endgültig getrockneten Netzwerks, etwa des 3D-Netzwerkes oder Vlieses, drastisch beeinflussen. Dies gelingt auch in kontinuierlichen Verfahren, indem die trocknenden Netzwerke, etwa 3D-Netzwerke oder Vliese, eine Zone, in der sie mit Lösemittel besprüht werden, durchlaufen. Wiederum werden Dichte und Porenverteilung drastisch beeinflusst.

Weiterhin kann vorteilhaft die Zugabe von Additiven, insbesondere von Bindern, vorgesehen sein, beispielsweise mittels Infiltration mit einer Additivlösung, etwa Lösemittel und/oder Wasser. Ebenso ist die Zugabe von Additiven mittels Besprühen mit Additivlösungen, etwa Lösemittel und/oder Wasser, im oben genannten kontinuierlichen Prozess möglich.

In einer weiteren Ausgestaltung ist die Zugabe von Bindern/Binderlösungen mit hoher Kohlenstoffausbeute zur Herstellung von Vollcarbon-Netzwerken, etwa Vollcarbon-Vliesen oder 3D-Vollcarbon-Netzwerken, möglich. Geeignete Binder sind beispielsweise Pech, Polyacrylnitril, Cyanat Novolak, Phenol Formaldehyd, Methylcellulose, Polyvinylalkohol, Polyethylenglykol und dergleichen.

Vorteilhaft ist weiterhin auch das Zumischen von anderen Partikel-Pulvern in die Mischung, etwa den Schlicker. Diese anderen Partikel können beispielsweise in Form von sphärischen Partikeln vorliegen, etwa Ruß, Graphit, Aluminium, Kupfer, Nickel, Silber, Aluminiumoxid, Aluminiumnitrid, Siliziumcarbid, Bornitrid, Diamant und andere, jeweils nanoskalig und/oder nicht-nanoskalig. Beispielsweise können die Partikel beispielsweise aber auch in Form von Filamenten vorliegen, etwa Naturfasern, Kohlefasern, Metallfasern, Keramikfasern, Glasfasern, Kunststofffasern, (Nano)fasern aller Materialien. In anderer Ausgestaltung können die Partikel aber auch in Form von Flocken vorliegen, etwa als delaminierter Graphit, expandierter Graphit, Graphit-, Metall-Flakes, beispielsweise Silber, Kupfer und dergleichen. Auch können die Partikel Keramikpartikel vorliegen, etwa als Bornitrid oder in Form anderer Materialien, und/oder in Form von Papier-Pulps, beispielsweise in Form von Cellulose, Polyamid, Polyaramid, Polyacrylnitril, Polyethylen, und dergleichen. Dabei können die zuvor beschriebenen unterschiedlichen Partikeltypen in jeder beliebigen Kombination zum Einsatz kommen.

In weiterer Ausgestaltung kann bei Verwendung eines saugfähigen Substrats vorteilhaft vorgesehen sein, Stützgewirke mit der Kohlenstoff-Nanomaterial-Mischung, beispielsweise dem CNX-Schlicker, zu infiltrieren, beispielsweise Kohlenstoff, Metall, Keramik, Glas, Kunststoff, und dergleichen.

In einer weiteren Variation können funktionelle Additive, beispielsweise metallorganische Substanzen, Hydrophobierungsmittel, und dergleichen, zur Einstellung besonderer Eigenschaften, wie beispielsweise Benetzungswinkel, katalytische Aktivität, Reaktivität, aber auch mechanische Festigkeit und andere, zugegeben werden.

Weiterhin ist die Verarbeitung der Mischungen, beispielsweise der Schlicker, mit anderen herkömmlichen Formgebungsverfahren, vorzugsweise aus der Keramik, wie Pressen, Strangpressen, Extrusion, und dergleichen, möglich.

Als weitere Variation des Verfahrens mit einem saugfähigen Substrat lässt sich auf das Substrat anstatt eines Trennmittels vorteilhaft ein µ-Sieb aufbringen. Die Mischung, beispielsweise der Schlicker, kann dann auf das Sieb gerakelt oder gegossen werden. Dies lässt sich zur Bereitstellung eines kontinuierlichen Verfahrens für dünne Platten nutzen, indem der Schlicker auf das Sieb gegeben wird und das Sieb nacheinander über unterschiedlich stark saugende Substrate gezogen wird. Das Sieb kann auch durch ein andersartiges geeignetes Filtermaterial ersetzt werden.

Die Trocknung kann in einer weiteren Variation über mikrowellenunterstützte Gefriertrocknung erfolgen.

In den hier beschriebenen erfindungsgemäßen Verfahren kann, muss aber nicht notwendigerweise, ausschließlich wässrig gearbeitet werden, ohne Lösemittel, Binder, oder Tenside. Somit können lösemittelbedingte Maßnahmen zum Arbeitsschutz, beispielsweise Ex-Schutz, entfallen. Die Verfahren sind umweltfreundlich, da keine belasteten Abwässer anfallen, und sie beschränken sich auf das Mischen von Feststoffen mit Wasser und das Rakeln oder Gießen dieser Mischungen auf einem Substrat beziehungsweise in eine Form. Es werden keine Druckgefäße benötigt. Auch werden keine Vakuum- oder Überdruck-Komponenten benötigt. Das Verfahren ist beliebig hochskalierbar, beispielsweise Platten im Bereich 1 m x 1 m. Die Trocknung verläuft sehr schnell, nämlich in 0,5h bis 3 Tagen, vorzugsweise in 3-10 Stunden, ohne dass das entstehende Vlies oder 3D-Netzwerk zerbricht. Zum Vergleich wird auf das Schutzrecht US 20030211028 verwiesen, indem ein Zeitraum von 8 Wochen genannt wird. Insgesamt entsteht eine erhebliche Zeitersparnis gegenüber den herkömmlichen Verfahren, da die Zyklen kurz sind. Verhältnismäßig große Stückzahlen sind mit dem erfindungsgemäßen Verfahren ohne weiteres möglich. Bei Verwendung eines saugfähigen Substrats ist das Herstellen mäßig komplexer Formen über Negativformen möglich.

Der teilgetrocknete Grünling kann vorteilhaft in eine zweite Trocknungseinheit transferiert werden. Ein Schritt zur Entfernung von Bindern oder anderen Additiven ist nicht nötig. Kombinationen mit anderen Feststoffen über die Co-Dispersion im Schlicker sind möglich.

Erfindungsgemäß hergestellte Vliese und 3D-Netzwerke weisen hohe Porositäten von über 50%, vorzugsweise über 75% bis hin zu 98% auf.

Beispielsweise kann das Kohlenstoff-Nanomaterial-Netzwerk eine Dichte von kleiner/gleich 0,5 g/cm³ aufweisen.

Das Herstellungsverfahren ist nicht auf kleine Produkte beschränkt, sondern erlaubt vielmehr auch große Dimensionen, beispielsweise eine Platte mit jeweils 100cm Seitenlänge und einer Dicke von 4cm.

Die Netzwerke, beispielsweise die 3D-Netzwerke und Vliese können tensid- und binderfrei hergestellt werden und sind maschinell bearbeitbar, beispielsweise mittels Bohren, Fräsen, Schleifen und dergleichen.

Sie sind infiltrierbar mit flüssigen Medien, beispielsweise mit Lösemittel, Binderlösungen, Harzen, und dergleichen.

Das Verfahren funktioniert insbesondere auch mit einer großen Anzahl an bekannten CNX-Modifikationen, beispielsweise getempert, graphitiert, oxidiert, funktionalisiert, und dergleichen.

Mischnetzwerke, insbesondere Mischvliese und 3D-Mischnetzwerke, mit Fremdpartikeln sind möglich, beispielsweise mit Ruß, Graphit, Kohle-, Glas-, Kunststoff-, Metall-, Keramikfasern, Glas-, Kunststoff-, Metall-, Keramikpulver, und dergleichen.

Für die erfindungsgemäßen Vliese und 3D-Netzwerke ergibt sich ein breites Anwendungsfeld. Gemäß einem weiteren Aspekt der Erfindung können wie vorstehend beschriebene erfindungsgemäße Kohlenstoff-Nanomaterial-Netzwerke wie folgt verwendet werden:
So ist über eine Änderung des Widerstandes oder der Kapazität bei Adsorption von Gasen ein Einsatz in der Sensorik möglich. Eine ähnliche Wirkungsweise bei flüssigen Substanzen ist ebenfalls möglich.

Weiterhin können die Netzwerke als poröse elektrische und thermische Leiter, etwa in der Gasdiffusionsschicht einer Brennstoffzelle eingesetzt werden.

In einer weiteren Anwendung können sie als Stützgewebe dienen, beispielsweise in Schaumkern-Kompositen, oder aber wenn sie mit einem Matrixmaterial infiltriert werden. Auf diese Weise lassen sich Kompositmaterialien mit einem hohen CNT-Gehalt herstellen.

Weiterhin eignen sich die erfindungsgemäßen Netzwerke als akustische Absorber, beispielsweise zum Dämpfen von Geräuschen und allgemein von Schall.

In einer weiteren Ausprägung eignen sich die erfindungsgemäßen Netzwerke als mechanische Absorber, etwa zur Dämpfung von mechanischen Schwingungen, beispielsweise infiltriert mit einem Elastomer.

Weiterhin sind mit den Netzwerken Isolationen auch im Hochtemperaturbereich möglich, da beispielsweise beim Einsatz von graphitiertem Ausgangsmaterial eine oxidative Stabilität bis 750°C möglich ist. Für diesen Einsatzzweck eignen sich insbesondere hochporöse Vliese mit z.B. 90% Porosität.

Die erfindungsgemäßen Netzwerke können auch als für bestimmte Gase und Flüssigkeiten selektiv wirkende Filter eingesetzt werden.

In einer weiteren Ausprägung eignen sich die Netzwerke zur Verwendung in elektrochemischen Systemen, beispielsweise in Superkondensatoren oder Lithium-Ionen-Batterien.

In einer weiteren Ausprägung eignen sich die Netzwerke zur Verwendung in Radiatoren oder elektrischen Heizungen.

Weiterhin können die Netzwerke in Kühlelementen und Wärmesenken eingesetzt werden, beispielsweise wenn sie mit Stoffen infiltriert sind, die bei Erwärmung flüssig werden.

In einer weiteren Ausprägung eignen sich die Netzwerke in einer polymerinfiltrierten Form auch zur Verwendung als Klebefolie.

Die Erfindung stellt ein einfaches und kostengünstiges Verfahren zur Herstellung von High-Tech Netzwerken, insbesondere Vliesen und 3D-Netzwerken, aus Nanofilamenten zur Verfügung, das ebenso einfach hochzuskalieren ist. Das Verfahren basiert auf Wasser und ist daher umweltfreundlich. Es entsteht bei dem Verfahren kein belastetes Abwasser. Das Wasser kann der Mischung, beispielsweise dem Schlicker, sehr schnell entzogen werden ohne das entstehende Netzwerk zu schädigen. Der Trocknungszyklus ist daher verhältnismäßig kurz. Es werden keine Hoch- oder Niederdruckkomponenten benötigt. Die Vliese und 3D-Netzwerke sind auch mit chemisch/physikalisch modifizierten CNT darstellbar. Mischvliese und 3D-Mischnetzwerke sind ohne Hindernisse realisierbar. 3D-Netzwerke und flache CNT-Vliese sind mit ein und demselben Prinzip darstellbar.

## Patentansprüche

1. Verfahren zum Herstellen eines Kohlenstoff-Nanomaterial-Netzwerks, insbesondere eines Kohlenstoff-Nanomaterial-3D-Netzwerks oder eines Kohlenstoff-Nanomaterial-Vlieses, **gekennzeichnet durch** folgende Schritte:
a) Kohlenstoff-Nanomaterial, insbesondere CNX, wird in eine wässrige Lösung gegeben;
b) die wässrige Kohlenstoff-Nanomaterial-Lösung wird auf ein Substrat gegeben und zu einem Grünkörper gebildet;
c) der Grünkörper wird getrocknet.

2. Verfahren nach Anspruch 1, **dadurch gekennzeichnet, dass** das Kohlenstoff-Nanomaterial in Wasser gegeben wird.

3. Verfahren nach Anspruch 1 oder 2, **dadurch gekennzeichnet, dass** die wässrige Kohlenstoff-Nanomaterial-Lösung in Form eines Schlickers auf das Substrat gegeben wird.

4. Verfahren nach einem der Ansprüche 1 bis 3, **dadurch gekennzeichnet, dass** das Kohlenstoff-Nanomaterial in der wässrigen Lösung und weitere Partikel miteinander vermengt werden.

5. Verfahren nach einem der Ansprüche 1 bis 4, **dadurch gekennzeichnet, dass** die wässrige Kohlenstoff-Nanomaterial-Lösung auf ein nicht saugfähiges Substrat gegeben wird.

6. Verfahren nach einem der Ansprüche 1 bis 4, **dadurch gekennzeichnet, dass** die wässrige Kohlenstoff-Nanomaterial-Lösung auf ein saugfähiges und/oder poröses Substrat gegeben wird, welches der Kohlenstoff-Nanomaterial-Lösung Wasser entzieht.

7. Verfahren nach einem der Ansprüche 1 bis 6, **dadurch gekennzeichnet, dass** die wässrige Kohlenstoff-Nanomaterial-Lösung auf ein planar ausgebildetes Substrat gegeben wird.

8. Verfahren nach einem der Ansprüche 1 bis 7, **dadurch gekennzeichnet, dass** die wässrige Kohlenstoff-Nanomaterial-Lösung auf ein Substrat mit einer dreidimensionalen Form gegeben wird.

9. Verfahren nach einem der Ansprüche 1 bis 8, **dadurch gekennzeichnet, dass** die wässrige Kohlenstoff-Nanomaterial-Lösung mittels eines Foliengießverfahrens auf dem Substrat aufgetragen wird.

10. Verfahren nach einem der Ansprüche 1 bis 9, **dadurch gekennzeichnet, dass** damit Kohlenstoff-Nanomaterial-Netzwerke in Form von SD-Körpern, Platten oder flexiblen Papieren hergestellt werden.

11. Kohlenstoff-Nanomaterial-Netzwerk, insbesondere Kohlenstoff-Nanomaterial-3D-Netzwerks oder Kohlenstoff-Nanomaterial-Vlies, erhältlich durch ein Verfahren gemäß einem der Ansprüche 1 bis 10.

12. Kohlenstoff-Nanomaterial-Netzwerk, insbesondere Kohlenstoff-Nanomaterial-3D-Netzwerk oder Kohlenstoff-Nanomaterial-Vlies, **dadurch gekennzeichnet, dass** dieses eine Porosität von über 50% aufweist.

## Claims

1. A process for producing a network of carbon nanomaterial, in particular a 3D-network of carbon nanomaterial or a nonwoven of carbon nanomaterial, **characterized by** the following steps:
a) carbon nanomaterial, in particular CNX, is added into an aqueous solution;
b) the aqueous solution of carbon nanomaterial is laid on a substrate and formed into a green body;
c) the green body is dried.

2. The process of claim 1, **characterized in that** the carbon nanomaterial is added into water.

3. The process of claim 1 or 2, **characterized in that** the aqueous solution of carbon nanomaterial is laid on the substrate in the form of a slip.

4. The process of any one of claims 1 to 3, **characterized in that** the carbon nanomaterial in the aqueous solution and further particles are mixed with each other.

5. The process of any one of claims 1 to 4, **characterized in that** the aqueous solution of carbon nanomaterial is laid on a non-absorbent substrate.

6. The process of any one of claims 1 to 4, **characterized in that** the aqueous solution of carbon nanomaterial is laid on an absorbent and/or porous substrate which withdraws water from the solution of carbon nanomaterial.

7. The process of any one of claims 1 to 6, **characterized in that** the aqueous solution of carbon nanomaterial is laid on a planarly formed substrate.

8. The process of any one of claims 1 to 7, **characterized in that** the aqueous solution of carbon nanomaterial is laid on a substrate having a three-dimensional form.

9. The process of any one of claims 1 to 8, **characterized in that** the aqueous solution of carbon nanomaterial is applied onto the substrate by a film casting process.

10. The process of any one of claims 1 to 9, **characterized in that** networks of carbon nanomaterial are produced in form of 3D-bodies, plates or flexible papers by using the process.

11. A network of carbon nanomaterial, in particular 3D-network of carbon nanomaterial or nonwoven of carbon nanomaterial, obtainable by a process according to any one of claims 1 to 10.

12. A network of carbon nanomaterial, in particular 3D-network of carbon nanomaterial or nonwoven of carbon nanomaterial, **characterized in that** it has a porosity of above 50%.

## Revendications

1. Procédé pour la fabrication d'une structure réticulée de nanomatériau de carbone, en particulier d'une structure réticulée 3D de nanomatériau de carbone ou d'une nappe de nanomatériau de carbone, **caractérisé par** les étapes suivantes:
a) un nanomatériau de carbone, en particulier CNX, est mis en solution aqueuse;
b) la solution aqueuse de nanomatériau de carbone est déposée sur un substrat et mise sous forme d'une matière brute;
c) la matière brute est séchée.

2. Procédé selon la revendication 1, **caractérisé en ce que** le nanomatériau de carbone est versé dans de l'eau.

3. Procédé selon la revendication 1 ou 2, **caractérisé en ce que** la solution aqueuse de nanomatériau de carbone est appliquée sous la forme d'une bouillie sur le substrat.

4. Procédé selon l'une des revendications 1 à 3, **caractérisé en ce que** le nanomatériau de carbone en solution aqueuse et d'autres particules sont mélangés entre eux.

5. Procédé selon l'une des revendications 1 à 4, **caractérisé en ce que** la solution aqueuse de nanomatériau de carbone est appliquée sur un substrat non absorbant.

6. Procédé selon l'une des revendications 1 à 4, **caractérisé en ce que** la solution aqueuse de nanomatériau de carbone est déposée sur un substrat absorbant et/ou poreux, qui extrait l'eau du nanomatériau de carbone.

7. Procédé selon l'une des revendications 1 à 6, **caractérisé en ce que** la solution aqueuse de nanomatériau de carbone est déposée sur un substrat plan.

8. Procédé selon l'une des revendications 1 à 7, **caractérisé en ce que** la solution aqueuse de nanomatériau de carbone est déposée sur un substrat ayant une forme tridimensionnelle.

9. Procédé selon l'une des revendications 1 à 8, **caractérisé en ce que** la solution aqueuse de nanomatériau de carbone est appliquée sur le substrat au moyen d'un procédé de coulée de feuilles.

10. Procédé selon l'une des revendications 1 à 9, **caractérisé en ce qu'**on prépare ainsi des structures réticulées de nanomatériau de carbone sous forme de produits 3D, de plaques ou de papiers souples.

11. Structure réticulée de nanomatériau de carbone, en particulier structure réticulée 3D de nanomatériau de carbone ou nappe de nanomatériau de carbone, pouvant être obtenue par un procédé selon l'une des revendications 1 à 10.

12. Structure réticulée de nanomatériau de carbone, en particulier structure réticulée 3D de nanomatériau de carbone ou nappe de nanomatériau de carbone, **caractérisée en ce qu'**elle présente une porosité supérieure à 50%.
